## Europäisches Patentamt
## European Patent Office
## Office européen des brevets

(19)

(11) Veröffentlichungsnummer: **0 004 072**
**B1**

(12) **EUROPÄISCHE PATENTSCHRIFT**

(45) Veröffentlichungstag der Patentschrift:
20.01.82

(21) Anmeldenummer: 79100681.0

(22) Anmeldetag: 07.03.79

(51) Int. Cl.³: **F 23 H 17/00**

(54) **Rostbelag, insbesondere für Grossfeuerungen.**

(30) Priorität: 07.03.78 DE 2809845

(43) Veröffentlichungstag der Anmeldung:
19.09.79 Patentblatt 79/19

(45) Bekanntmachung des Hinweises auf die Patenterteilung:
20.01.82 Patentblatt 82/3

(84) Benannte Vertragsstaaten:
BE FR IT NL SE

(56) Entgegenhaltungen:
CH-A-579 748
DE-B-2 622 965
DE-B-1 451 519
DE-C-277 330
GB-A-288 459
GB-A-744 508

(73) Patentinhaber: **Josef Martin Feuerungsbau GmbH,
Leopoldstrasse 248, D-8000 München 40 (DE)**

(72) Erfinder: **Martin, Johannes Josef, Dr.-Ing.,
Leopoldstrasse 248, D-8000 München 40 (DE)**
Erfinder: **Martin, Walter Josef, Dipl.-Ing.,
Leopoldstrasse 248, D-8000 München 40 (DE)**
Erfinder: **Weber, Erich, Henckystrasse 3,
D-8000 München 40 (DE)**

(74) Vertreter: **Zmyj, Erwin, Dipl.-Ing., Postfach 95 04 28,
D-8000 München 95 (DE)**

## Rostbelag, insbesondere für Grossfeuerungen

Die Erfindung bezieht sich auf einen Rostbelag, insbesondere für Grossfeuerungen, mit aus einzelnen Roststäben aufgebauten Roststufen, von denen feststehende und bewegbare einander abwechseln und einander teilweise übergreifen, wobei zumindest an einer Seite des Rostbelages quer zur Rostlängsrichtung nachgiebig gegen den Rostbelag andrückbare Seitenbegrenzungsteile einer Kompensationseinrichtung vorgesehen sind. Ein Rostbelag mit Kompensationseinrichtung dieser Art geht aus der DE-B 2 622 965 als bekannt hervor.

Die Seitenbegrenzungsteile werden durch Kompensationseinrichtungen gegen den Rostbelag gedrückt, um einen Spalt zwischen dem Rostbelag und den Seitenbegrenzungsteilen zu vermeiden und Wärmedehnungen in Querrichtung des Rostbelages zuzulassen. Bei grösseren Rostfeuerungen, die in mehrere Bahnen unterteilt sind, können solche Kompensationseinrichtungen auch zwischen benachbarten Rostbahnen angeordnet sein.

Da die Kompensationseinrichtungen die Seitenbegrenzungsteile nachgiebig an den Rostbelag andrücken, besteht die Gefahr, dass Schlakkenteile und andere unerwünschte Gegenstände zwischen die Randstäbe und die Seitenbegrenzungsteile eindringen und diese entgegen ihrer von der Kompensationseinrichtung ausgeübten Andrückkraft verschieben, so dass Randspalte entstehen.

Während sich die Randspalte beweglicher Stufen durch den langen Schürhub der sie begrenzenden Randstäbe wieder reinigen, da eingedrungene Teile bald nach unten durchfallen, können Teile, die in Randspalte zwischen Seitenbegrenzungsteile und feststehende Randstäbe eindringen, in diesen Spalten stecken bleiben, weil zwischen den Randstäben unbeweglicher Stufen und den Seitenbegrenzungsplatten keine Rosthubbewegung stattfindet, die Voraussetzung für eine Reinigungswirkung ist. In einen einmal geöffneten Spalt zwischen den Seitenbegrenzungsteilen und einer unbeweglichen Roststufe können aber mehr und mehr Teile eindringen, wodurch die Seitenbegrenzungsteile der Kompensationseinrichtung mehr und mehr nach aussen gedrückt werden, bis ihr Ausweichvermögen erschöpft ist. Im Anschluss an diesen Zeitpunkt baut sich innerhalb der betroffenen Roststufe ein Seitendruck auf, der verschiedene nachteilige Wirkungen zur Folge hat. Eine dieser nachteiligen Wirkungen ist bereits erwähnt, sie besteht darin, dass die seitliche Kompensationseinrichtung ihre Wirksamkeit verliert, da sie bis zu ihrem Anschlag nach aussen gedrückt ist. Sie kann dann ihre Aufgabe, die Randspaltbildung zu verhindern, nicht mehr erfüllen, da sie einer seitlichen Verschiebung der Randstäbe beweglicher Roststufen wegen der Blockierung durch den Randstab der angrenzenden feststehenden Roststufe nicht mehr folgen kann. Weiterhin kann der Fall eintreten, dass die Relativbewegung bei innerhalb einer Roststufe relativ zueinander bewegbaren Roststäben durch zu hohen Seitendruck unterbunden wird, wodurch die Selbstreinigung innerhalb der Roststufe ausfällt oder zumindest erschwert wird, da durch zwischen die einzelnen Roststäbe wegen des Fortfalls der Selbstreinigung eindringende Teile die betreffende Roststufe immer mehr unter seitlichen Druck gerät, was beispielsweise zu einem Ausweichen der Roststufe nach oben führen kann. Hierbei liegen die Roststäbe der einen Roststufe dann nicht mehr ganz auf der darunterliegenden Roststufe auf, wodurch andere Teile aus der Brennschicht zwischen diese Roststufen gelangen können, so dass sich die obere Roststufe weiter abheben kann. Hierdurch können sogar gelegentlich Betriebsunterbrechungen verursacht werden.

Das Eindringen von Teilen zwischen die Randstäbe fester Roststufen und ihre Seitenbegrenzungsteile wird vorzugsweise dadurch verursacht, dass Teile aus der Brennschicht vorübergehend zwischen die Randstäbe beweglicher Roststufen und die Seitenbegrenzungsteile der Kompensationseinrichtung gelangen, wodurch letztere zusammengedrückt wird und somit auch ein Randspalt zwischen den Randstäben der festen Stufen und den Seitenbegrenzungsteilen entsteht, in den Teile aus der Brennschicht eindringen können, was zu den oben angegebenen Auswirkungen führt. Selbst wenn durch die Schürbewegung die zwischen Randstäbe von beweglichen Roststufen und die Seitenbegrenzungsteile eingedrungenen Teile beseitigt werden, können die Seitenbegrenzungsteile nicht mehr nachrücken und den Spalt wieder schliessen, weil sie durch die in den Randspalt der benachbarten festen Stufe eingedrungenen Teile blockiert werden.

Aufgabe der Erfindung ist es, einen Rostbelag der eingangs erläuterten Art so auszugestalten, dass die Funktionsfähigkeit der dem Rostbelag zugeordneten Kompensationseinrichtung nicht beeinträchtigt wird.

Diese Aufgabe wird erfindungsgemäss dadurch gelöst, dass zwischen dem Randstab jeder festen Roststufe und den Seitenbegrenzungsteilen auch dann noch ein Spalt vorhanden ist, wenn die Seitenbegrenzungsteile bzw. an diesen anliegende Zusatzteile spaltlos an dem Randstab der beweglichen Stufe anliegen und dass dem Randstab der feststehenden Stufe ein Zusatzrandroststab zugeordnet ist, der dem Oberflächenverlauf des feststehenden Randstabes zumindest in dessen Randbereich angepasst ist, den Spalt zwischen den Seitenbegrenzungsteilen und dem feststehenden Roststab sowie letzteren in seinem Randbereich überdeckend eng an den bewegbaren Seitenbegrenzungsteilen anliegt, in Querrichtung zum Randstab der feststehenden Roststufe relativ zu diesem verschiebbar ist und Schwenkbewegungen des feststehenden Randstabes folgend gehalten ist.

Durch diese Ausgestaltung des Rostbelages wird das Eindringen von Teilen aus der Brennschicht zwischen Seitenbegrenzungsteile der Kompensationseinrichtung und den Randstäben feststehender Roststufen verhindert, wodurch die eingangs erläuterten Nachteile vermieden werden, so dass die Funktionsfähigkeit der Kompensationseinrichtung während des gesamten Betriebes erhalten bleibt. Durch die Belassung eines Spaltes zwischen den Randstäben feststehender Roststufen und den Seitenbegrenzungsteilen, wobei dieser Spalt auch dann vorhanden sein soll, wenn die Seitenbegrenzungsteile spaltlos an den Randstäben beweglicher Roststufen anliegen, wird erreicht, dass die Seitenbegrenzungsteile der Kompensationseinrichtung durch die feststehende Roststufe in ihren Seitenbewegungen nicht blockiert, sondern stets gegen den Randstab der beweglichen Roststufe gedrückt werden können, wodurch in Verbindung mit der selbstreinigenden Wirkung ein Spalt in diesem Bereich vermieden bzw. rasch wieder rückgängig gemacht wird. Durch die Anordnung eines Zusatzrandroststabes wird dieser Spalt zwischen dem Seitenbegrenzungsteil und dem Randstab der festen Roststufe stets überdeckt, so dass das Eindringen von Teilen aus der Brennschicht an diesen Stellen vermieden ist. Da der Zusatzrandroststab der durch Verschleiss bedingten Absenkbewegung des Randstabes folgen kann und dadurch stets dicht auf diesem liegt, wird auch über eine längere Betriebszeit das Eindringen von Teilen in den Spalt zwischen einem feststehenden Randstab und dem zugeordneten Seitenbegrenzungsteil der Kompensationseinrichtung vermieden.

Eine vorteilhafte Weiterbildung der Erfindung ergibt sich aus Anspruch 2, weil durch diese Ausgestaltung zweierlei Materialien verwendet werden können, die den besonderen Aufgaben gerecht werden. Während der Abdeckteil aus einer besonders hitzebeständigen und verschleissfesten Legierung bestehen muss, die im allgemeinen wenig bruchfest ist, übernimmt der Trägerteil, der beispielsweise aus Walzstahl bestehen kann, die Aufgabe, den gegebenenfalls aus mehreren Teilen bestehenden Abdeckteil an der gewünschten Stelle zu halten und ihn den Bewegungen des Randstabes senkrecht zu seiner Oberfläche nachzuführen.

Damit der Zusatzrandroststab stets spaltfrei an seinem Seitenbegrenzungsteil anliegt, kann er entsprechend Anspruch 3 durch federnde Mittel gegen das Seitenbegrenzungsteil angepresst sein. Dabei kann der Zusatzrandroststab bzw. dessen Trägerteil entweder an dem zugeordneten Seitenbegrenzungsteil schwenkbar geführt und an diesem durch Befestigungsmittel gehalten sein, wobei die Abstützung durch den Randstab der feststehenden Stufe erfolgt, oder der Zusatzrandroststab kann ausschliesslich durch den Randstab der festen Stufe abgestützt und geführt sein.

Wenn von einem Randstab fester Stufen die Rede ist, so soll hierunter ein Roststab verstanden werden, der keine Schürbewegungen ausführt. Er ist jedoch so frei gehalten, dass er beispielsweise den durch Verschleisserscheinungen auftretenden Höhenveränderungen des darunter liegenden bewegbaren Randstabes folgen kann.

Nach einer ersten grundsätzlichen Ausgestaltungsmöglichkeit können die Zusatzrandroststäbe hintereinander liegender feststehender Roststufen des Rostbelages endweise aneinander abdichtend anschliessen, wobei die jeweils eine Schürbewegung ausführenden Randstäbe der bewegbaren Roststufen neben den Zusatzrandroststäben geführt sind, d.h. die den bewegbaren Roststufen zugeordneten Randstäbe sind entsprechend der Breite der Zusatzrandroststäbe der benachbarten feststehenden Roststufe von den Seitenbegrenzungsteilen abgerückt. Die Abdichtung im Randbereich erfolgt bei dieser Ausgestaltung ausschliesslich durch die Zusatzrandroststäbe, die einerseits eng an den Seitenbegrenzungsteilen der Kompensationseinrichtung und den Randstäben bewegbarer Roststufen anliegen, und anderseits die Randstäbe der feststehenden Roststufen überdecken.

Zur besseren Abdichtung an ihren endweisen Berührungsflächen können die Zusatzrandroststäbe sich seitlich überlappen.

Da die Randstäbe feststehender Roststufen infolge Verschleisses aller Roststäbe an ihrer Auflagefläche kleine auf- und abwärts gerichtete Bewegungen während der Schürbewegung der ihnen zugeordneten Randstäbe der bewegbaren Stufen ausführen, bewegen sich die Zusatzrandroststäbe zwangsweise gleichsinnig mit. An den Stossstellen zwischen dem Kopfende des einen Zusatzrandroststabes und dem hinteren Ende des anschliessenden Zusatzrandroststabes entstehen somit Relativverschiebungen, die zu einem Verklemmen führen können, wenn Ascheteile in den in der Praxis nicht vollständig auszuschliessenden Spalt zwischen den beiden Zusatzrandroststäben gelangen. Da die Randstäbe und die Zusatzrandroststäbe am gleichen Ende schwenkbar gehalten sind, so dass das gegenüberliegende Ende eine grössere Bewegung ausführt, kann es auch aufgrund von Verschleisserscheinungen am Roststabkopf zu einer Relativverschiebung der endweise aneinanderstossenden Zusatzrandroststäbe und damit zu der oben erwähnten Möglichkeit eines Verklemmens kommen.

Gemäss einer anderen Ausgestaltung wird eine gegenseitige endweise Berührung der Zusatzrandroststäbe dadurch vermieden, dass jeder Zusatzrandroststab auf dem jeweils darunterliegenden Randstab der bewegbaren Roststufe mit seinem Kopf aufliegt und vom jeweils darüberliegenden Randstab bewegbarer Roststufen derart überdeckt ist, dass dieser im Bereich seines Kopfes eine dem Profil des Zusatzrandroststabes angepasste Aussparung aufweist. Hierdurch ist der Randstab bewegbarer Roststufen mit seinem den Zusatzrandroststab überdeckenden Teil an die Seitenbegrenzungsteile unmittelbar angedrückt. Der Randstab der bewegbaren Roststufe dichtet also zwischen den Seitenbegrenzungsteilen und dem Rostbelag in dem Bereich ab, in welchem bei dieser Ausführungsform die gegenseitige Berührung hintereinanderliegender Zusatzrandroststäbe fehlt. Da der Zusatzrandroststab ebenso wie der ihm zugeordnete Randstab der festen Roststufe auf dem darunterliegenden Randstab der bewegbaren Roststufe aufliegt, tritt sowohl am Kopf des Randstabes der festen Roststufe als auch am Kopf des Zusatzrandroststabes im wesentlichen der gleiche Verschleiss ein, so dass der Zusatzrandroststab der durch Verschleiss verursachten Absenkung des von ihm überdeckten Randstabes der festen Roststufe folgt. Obendrein wird der Zusatzrandroststab durch den ihn überlagernden Randstab der beweglichen Roststufe nach unten gedrückt, so dass er stets auf dem ihm zugeordneten Randstab der festen Roststufe aufliegt.

Wenn der Rücken des Zusatzrandroststabes von den Seitenbegrenzungsteilen zum Rostbelag hin geneigt ist, so ist dies insofern von Vorteil, als auch die zwischen dem den Zusatzrandroststab überdeckenden Teil des Randstabes der bewegbaren Roststufe und den Seitenbegrenzungsteilen eindringenden und hindurchfallenden Teile vom Zusatzrandroststab frei nach unten abgleiten können, so dass sich diese Teile nicht im Randbereich des Rostes anstauen können.

Die Erfindung ist in der Zeichnung beispielsweise erläutert. In dieser zeigen:

Fig. 1 einen Längsschnitt durch einen Feuerungsrost;

Fig. 2 einen Schnitt nach der Linie II–II in Fig. 1;

Fig. 3 einen Schnitt nach der Linie III–III in Fig. 1;

Fig. 4 einen der Fig. 1 ähnlichen Längsschnitt durch einen abgeänderten Rostbelag eines Feuerungsrostes;

Fig. 5 einen Schnitt nach der Linie V–V in Fig. 4; und

Fig. 6 einen der Fig. 5 ähnlichen Schnitt durch eine abgeänderte Ausführungsform eines Feuerungsrostes.

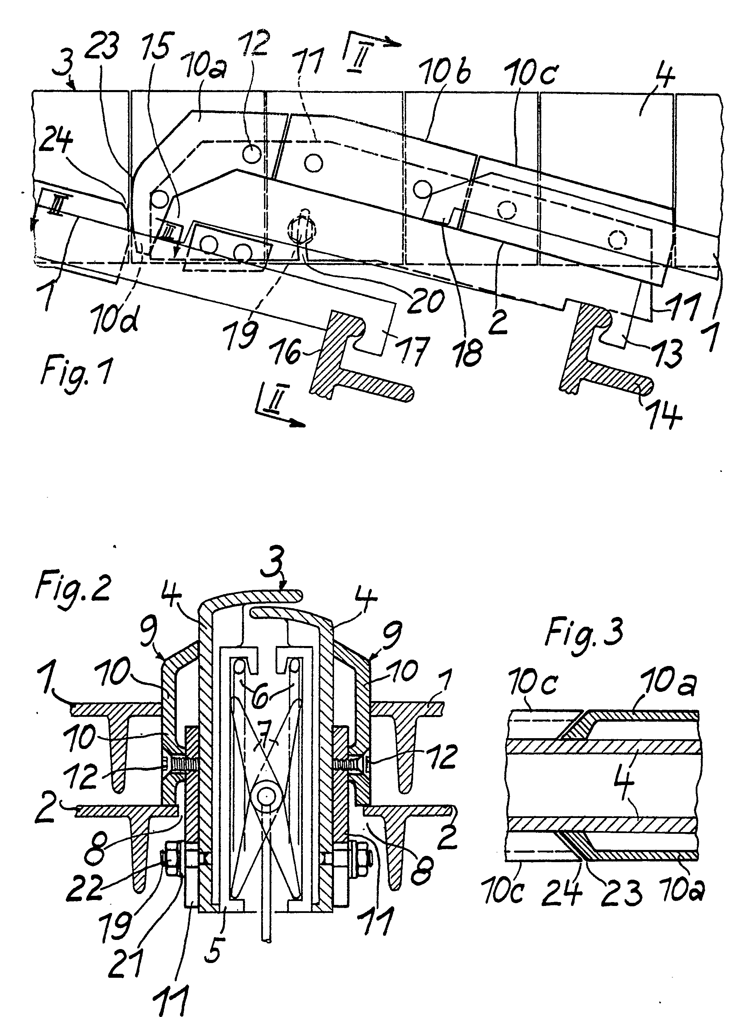

In den Fig. 1 bis 3 ist eine erste Ausführungsform eines Rostbelages für Feuerungsroste nach der Erfindung dargestellt, bei dem feststehende und bewegliche Roststufen miteinander abwechseln. In den Figuren sind nur die Randstäbe der jeweiligen Roststufen dargestellt. Der Randstab der beweglichen, also in Längsrichtung einen Schürhub ausführenden Roststufe ist mit 1 und der Randstab der feststehenden Roststufe ist mit 2 bezeichnet. Die Randstäbe 1 und 2 grenzen an eine Kompensationseinrichtung 3 an, die quer zur Längsrichtung der Roststäbe bewegbare Seitenbegrenzungsteile 4 aufweist. Bei dem in Fig. 2 dargestellten Beispiel sind die Seitenbegrenzungsteile 4 an Trägern 5 befestigt, die auf Stützen 6 schwenkbar gelagert und mittels einer Hebeleinrichtung 7, die unter der Belastung eines Gewichtes oder einer Feder steht, parallel gegen die Randstäbe des Rostbelages gedrückt, wodurch die Seitenbegrenzungsteile 4 an den Randstäben 1 der bewegbaren Roststufen spaltlos anliegen, während gegenüber den Randstäben 2 fester Roststufen ein Spalt 8 verbleibt.

Um den zwischen den Randstäben 2 der jeweils feststehenden Roststufen und den Seitenbegrenzungsteilen 4 befindlichen Randspalt 8 gegen das Eindringen von Teilen aus der Brennschicht zu schützen, sind an den Randstäben 2 der feststehenden Roststufen Zusatzrandroststäbe 9 vorgesehen, die im dargestellten Beispiel aus einem mehrteiligen Abdeckteil 10 und einem Trägerteil 11 bestehen. Der mehrteilige Abdeckteil 10 besteht beispielsweise aus einzelnen hitzebeständigen und verschleissfesten Platten 10a, 10b und 10c und ist dem feststehenden Randstab 2 angepasst, d.h. die Innenkontur der Plattenteile 10a bis 10c entspricht der Aussenkontur des Randstabes 2. Der mehrteilige Abdeckteil 10 ist an dem Trägerteil 11 beispielsweise mittels Schrauben 12 befestigt.

Der Randstab 2 der feststehenden Stufe ist mit seinem Einhängeende 13 auf einer Einhängeschiene 14 eingehängt, die an einem nicht dargestellten Tragrahmen befestigt ist. Mit seinem Kopf 15 liegt der Randstab 2 auf dem darunter liegenden Randstab 1 der in Längsrichtung bewegbaren Roststufe auf, bei der die einzelnen Roststäbe 1 an einer hin und her verfahrbaren Einhängeschiene 16 mit einem Einhängeende 17 eingehängt sind. Der Kopf 18 des bewegbaren Randstabes 1 liegt dann wieder auf einem Randstab 2 einer feststehenden Roststufe auf, d.h. diese Anordnung wiederholt sich von Roststufe zu Roststufe.

Der Trägerteil 11 steht über den Randstab 2 nach oben hervor, so dass die Einzelplatten des Abdeckteils mittels der als Halteteile dienenden Schrauben 12 am Trägerteil 11 befestigt werden können und der Abdeckteil 10 den Randpalt 8 zwischen den Seitenbegrenzungsteilen 4 und dem Randstab 2 der feststehenden Roststufe überdecken kann.

Da der Randstab 2 mit seinem Kopf 15 auf dem Randstab 1 der bewegbaren Roststufe aufliegt, unterliegt er im Laufe der Zeit einem gewissen Verschleiss, wodurch er sich absenkt. Diesem Absenken muss der Zusatzrandroststab 9 folgen können. Aus diesem Grunde ist der Trägerteil 11 schwenkbar gelagert, was dadurch erfolgen kann, dass er mit seinem hinteren Ende auf der Einhängeschiene 14 aufruht und im mittleren bis vorderen Bereich an die Seitenbegrenzungsteile 4 angedrückt und an diesen geführt ist. Diese Führung erfolgt mittels eines Bolzens 19, der aus den Seitenbegrenzungsteilen 4 hervorsteht und durch einen Schlitz 20 des Trägerteils 11 hindurchfasst. Der Trägerteil 11 ist beispielsweise mittels Federn 21 gegen die Seitenbegrenzungsteile 4 angedrückt, wodurch der Abdeckteil 10 ebenfalls eng an den Seitenbegrenzungsteilen 4 anliegt. Die Federn 21 sind zwischen einer Mutter 22 des Bolzens 19 und dem Trägerteil 11 angeordnet. Aufgrund der Auflage des Trägerteils 11 auf der Aufhängeschiene 14 und der Führung mittels des Bolzens 19, der durch den Schlitz 20 hindurchgreift, kann der Trägerteil 11 und damit der gesamte Zusatzrandroststab 9 den Bewegungen des Randstabes 2 der feststehenden Roststufe folgen, wodurch der Spalt 8 zwischen dem Randstab 2 und der Kompensationseinrichtung 3 gegen das Einfallen von Teilen aus der Brennschicht abgedeckt ist.

Die dem Kopf zugeordnete Abdeckplatte 10a ist mit einem schnabelförmigen Teil 10d versehen, der eine bogenförmig abgerundete Stirnkante 23 aufweist, die mit einer Stirnkante 24 des nachfolgenden Zusatzrandroststabes zusammenwirkt, die entsprechend der bogenförmigen Ausgestaltung der Kante 23 konkav ausgebildet ist. Die beiden Stirnkanten 23 und 24 liegen mit einem geringen Dehnungsspalt aneinander und sind seitlich abgeschrägt, so dass sie sich in seitlicher Richtung überlappen, wie dies insbesondere aus Fig. 3 hervorgeht.

Zwischen die Stirnkanten 23 und 24 der hintereinanderliegenden Zusatzrandroststäbe 9 können unter ungünstigen Verhältnissen Teile aus der Brennschicht eindringen, so dass die gegenseitige Verschwenkbarkeit gestört oder vollständig unterbunden sein kann. Hierdurch kann der Fall eintreten, dass der Zusatzrandroststab dem Randstab 2 der feststehenden Roststufe bei seinen Absenkbewegungen nicht mehr folgen kann, was zu einer Verschlechterung der Randspaltabdeckung führt, da nun Teile zwischen den Zusatzrandroststab und den Randstab 2 der festen Roststufe und somit in den Randspalt 8 gelangen können.

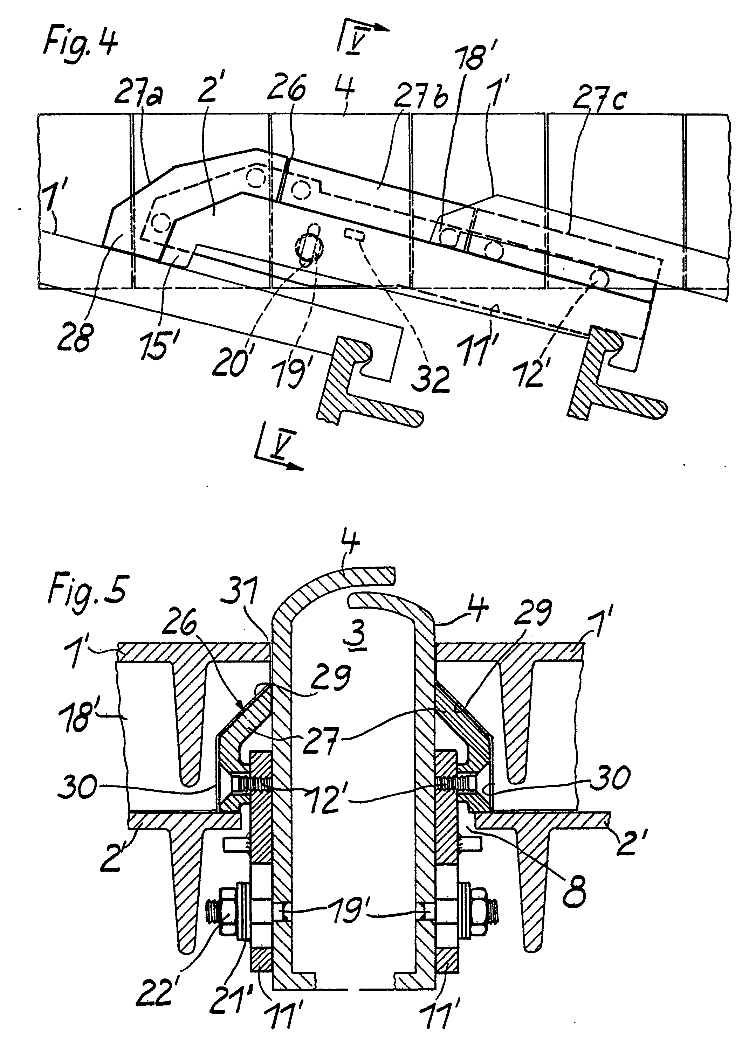

Eine Ausgestaltung, bei der diese an sich entfernte Möglichkeit ausgeschlossen ist, ist in den Fig. 4 und 5 dargestellt.

Bei dieser Ausführungsform sind die Zusatzrandroststäbe mit 26 bezeichnet und entsprechen in ihrem Aufbau im wesentlichen den Zusatzrandroststäben 9 der ersten Ausführungsform. Ein wesentlicher Unterschied zwischen den Zusatzrandroststäben 9 und den Zusatzrandroststäben 26 besteht darin, dass die Abdeckteile 27 hintereinanderliegender Zusatzrandroststäbe einander nicht mehr berühren. Der Abdeckteil 27, der ebenfalls aus mehreren Einzelplatten 27a, 27b und 27c besteht, weist eine vordere Platte 27a auf, die nach Art eines Roststabkopfes ausgebildet ist und ebenso wie der Roststabkopf 15′ des Randstabes 2′ der feststehenden Roststufe auf dem Roststabrücken des darunterliegenden Randstabes 1′ der beweglichen Stufe aufliegt. Der Kopf des Zusatzrandroststabes 26 ist mit 28 bezeichnet.

Damit nun trotz der fehlenden gegenseitigen Berührung an den Enden benachbarter Zusatzrandroststäbe 26 eine durchgehende Abdichtung des Randspaltes 8 ermöglicht wird, sind die Randstäbe 1′ im Bereich ihres Kopfes 18′ dem Profil des Zusatzrandroststabes 26 angepasst. Die mit 29 und 30 bezeichnete Innenkontur des Kopfes 18′ des Randstabes 1′ liegt an der Aussenkontur des Abdeckteiles 27 des Zusatzrandroststabes 26 an und ausserdem liegt der Randstab 1′ im Gegensatz zu der Ausgestaltung nach den Fig. 1 bis 3 unmittelbar eng an den Seitenbegrenzungsteilen 4 der Kompensationseinrichtung 3 an. Auf diese Weise wird durch den Randstab 1′ der beweglichen Roststufe der Übergangsbereich zwischen hintereinanderliegenden Zusatzrandroststäben 26 abgedichtet. Da der Kopf 28 des Zusatzrandroststabes 26 ebenso wie der Kopf 15′ des Randstabes 2′ auf dem Rücken des längsbeweglichen Randstabes 1′ aufliegt, unterliegen beide Roststabköpfe dem gleichen Verschleiss, so dass der Zusatzrandroststab den Absenkbewegungen des Randstabes 2′ folgt. Zu diesem Zweck ist der Trägerteil 11′ mit einem bogenförmigen Langloch 20′ versehen, durch das eine Halterung 19′ hindurchgreift, mit welcher der Trägerteil 11′ an den Seitenbegrenzungsteilen 4 der Kompensationseinrichtung 3 geführt ist. Die Halterung 19′ ist in den Seitenbegrenzungsteilen 4 eingesetzt und weist beispielsweise eine Mutter 22′ auf, mit deren Hilfe Federn 21′ gegen den Trägerteil 11′ gedrückt werden können, wodurch dieser federnd an den Seitenbegrenzungsteilen 4 anliegt.

Da der Randstab 1′ im Bereich seines Kopfes einen Ausschnitt mit der Innenbegrenzung 29 und 30 aufweist, so dass er über den Abdeckteil 27 des Zusatzrandroststabes 26 greift, wird letzterer durch den Randstab 1′ der bewegbaren Roststufe stets nach unten gedrückt, so dass er mit seinem Kopf 28 auf dem darunterliegenden Randstab 1′ der nächsten bewegbaren Stufe mit Sicherheit aufliegt. Aufgrund dieses Ausschnittes 29, 30 liegt der Randstab 1′ in seiner gesamten Länge mit seiner Seitenflanke 31 an den Seitenbegrenzungsteilen 4 der Kompensationseinrichtung 3 an.

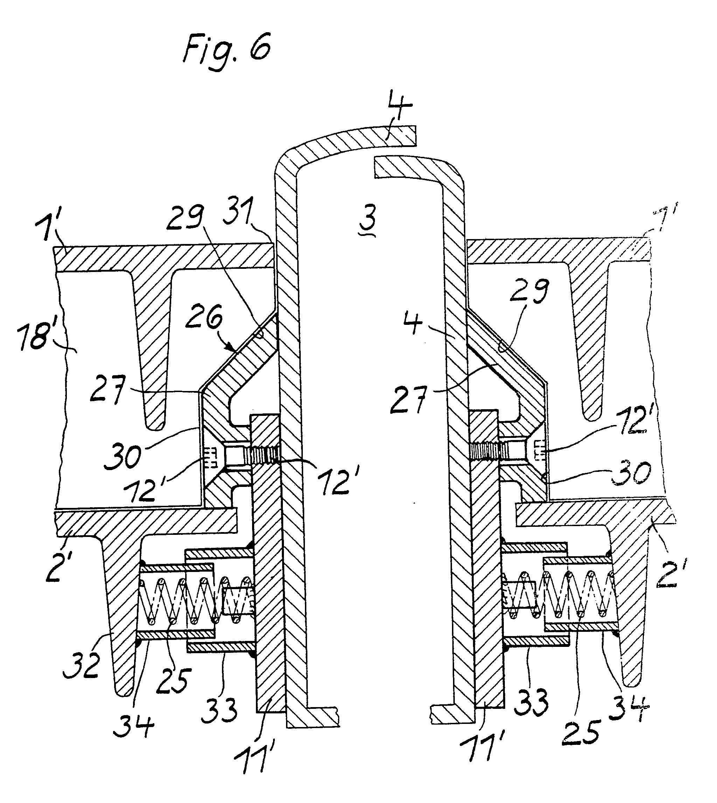

Eine weitere mögliche Ausführungsform ist in Fig. 6 dargestellt. Bei diesem Ausführungsbeispiel, welches hinsichtlich der Zusatzrandroststäbe dem Ausführungsbeispiel nach den Fig. 4 und 5 entspricht, sind gleiche Teile mit gleichen Bezugszeichen versehen. Die Abänderung gegenüber den Ausführungsbeispielen nach den Fig. 1 bis 5 besteht darin, dass der Zusatzrandroststab 26 nicht an den Seitenberenzungsteilen 4 geführt, sondern ausschliesslich durch den Randstab 2′ der festen Roststufe getragen und gegenüber diesem durch eine Feder 25 abgestützt ist, die einerseits an einer Rippe 32 des Randstabes 2′ und anderseits am Trägerteil 11′ des Zusatzrandroststabes 26 anliegt. Die Feder 25 drückt also den Zusatzrandroststab 26 gegen die Seitenbegrenzungsteile 4 der Kompensationseinrichtung. Da dieser Roststab ausschliesslich durch den Randstab 2′ getragen und vom Randstab 1′ der angrenzenden beweglichen Stufe überdeckt ist, folgt er stets den Höhenbewegungen des Randstabes 2′ der festen Stufe. Die Feder 25 ist von einer teleskopartigen Hülse 33, 34 umgeben, so dass sie gegen Hitzeeinwirkung geschützt ist. Gleichzeitig übernimmt die teleskopartige Hülse 33, 34 Führungsaufgaben für die Feder und den Trägerteil 11′ des Zusatzrandroststabes 26.

Bei allen Ausführungsbeispielen sind die Abdeckteile 10 bzw. 27 in ihrem oberen Bereich ausgehend von den Seitenbegrenzungsteilen 4 in Richtung auf den Rost abgeschrägt, wodurch Teile der Brennschicht nach innen auf den Rost rutschen können.

**Patentansprüche**

1. Rostbelag, insbesondere für Grossfeuerungen, mit aus einzelnen Roststäben (1, 1', 2, 2',) aufgebauten Roststufen, von denen feststehende (2, 2') und bewegbare (1, 1') einander abwechseln und einander teilweise übergreifen, wobei zumindest an einer Seite des Rostbelages quer zur Rostlängsrichtung nachgiebig gegen den Rostbelag andrückbare Seitenbegrenzungsteile (4) einer Kompensationseinrichtung (3) vorgesehen sind, dadurch gekennzeichnet, dass zwischen dem Randstab (2, 2') jeder festen Roststufe und den Seitenbegrenzungsteilen (4) auch dann noch ein Spalt (8) vorhanden ist, wenn die Seitenbegrenzungsteile (4) bzw. an diesen anliegende Zusatzteile (9) spaltlos an dem Randstab (1' bzw. 1) der beweglichen Roststufe anliegen und dass dem Randstab (2, 2') der feststehenden Roststufe ein Zusatzrandroststab (9, 26) zugeordnet ist, der dem Oberflächenverlauf des feststehenden Randstabes (2, 2') zumindest in dessen Randbereich angepasst ist, den Spalt (8) zwischen den Seitenbegrenzungsteilen (4) und dem feststehenden Roststab (2, 2') sowie letzteren in seinem Randbereich überdeckend eng an den bewegbaren Seitenbegrenzungsteilen (4) anliegt, in Querrichtung zum Randstab (2, 2') der feststehenden Roststufe relativ zu diesem verschiebbar ist und Schwenkbewegungen des feststehenden Randstabes (2, 2') folgend gehalten ist.

2. Rostbelag nach Anspruch 1, dadurch gekennzeichnet, dass der Zusatzrandroststab (9, 26) aus einem den Schwenkbewegungen des festen Randstabes (2, 2') folgenden schwenkbar geführten Trägerteil (11, 11') und einem daran befestigten, auf dem zugeordneten Randstab (2, 2') aufliegenden Abdeckteil (10, 27) besteht.

3. Rostbelag nach Anspruch 1 oder 2, dadurch gekennzeichnet, dass der Zusatzrandroststab (9, 26) durch federnde Mittel (21, 21', 25) gegen die Seitenbegrenzungsteile (4) anpressbar ist.

4. Rostbelag nach einem der Ansprüche 1 bis 3, dadurch gekennzeichnet, dass der Zusatzrandroststab (9, 26) bzw. dessen Trägerteil (11, 11') an den zugeordneten Seitenbegrenzungsteilen (4) schwenkbar geführt (19, 20, 19', 20') ist.

5. Rostbelag nach einem der Ansprüche 1 bis 3, dadurch gekennzeichnet, dass der Zusatzrandroststab (9, 26) bzw. dessen Trägerteil (11, 11') ausschliesslich vom Randstab (2, 2') der feststehenden Roststufe getragen und geführt ist.

6. Rostbelag nach einem der Ansprüche 1 bis 5, dadurch gekennzeichnet, dass die Zusatzrandroststäbe (9) hintereinanderliegender Roststufen des Rostbelages endweise aneinander abdichtend anschliessen und dass die jeweils eine Schürbewegung ausführenden Randstäbe (1) neben den Zusatzrandroststäben (9) geführt sind.

7. Rostbelag nach Anspruch 6, dadurch gekennzeichnet, dass sich die Zusatzrandroststäbe (9) an ihren endweisen Berührungsflächen (23, 24) seitlich überlappen.

8. Rostbelag nach einem der Ansprüche 1 bis 5, dadurch gekennzeichnet, dass jeder Zusatzrandroststab (26) auf dem jeweils darunterliegenden bewegbaren Randstab (1') mit seinem Kopf (28) aufliegt und vom jeweils darüberliegenden Randstab (1') bewegbarer Roststufen überdeckt ist, der im Bereich seines Kopfes (18') eine dem Profil des Zusatzrandroststabes (26) angepasste Aussparung (29, 30) aufweist.

9. Rostbelag nach einem der Ansprüche 1 bis 8, dadurch gekennzeichnet, dass der Stabrücken des Zusatzrandroststabes (9, 26) von den Seitenbegrenzungsteilen (4) zum Rostbelag hin geneigt ist.

**Claims**

1. Grate covering, especially for large furnaces installations, with grate stages which are built up of individual grate bars (1, 1', 2, 2') and of which stationary (2, 2') and movable ones (1, 1') alternate and partially overlap one another, wherein lateral boundary parts (4) of a compensation equipment (3) are provided to at least one side of the grate covering and pressable against the grate covering yieldingly transversely to the longitudinal direction of the grate, characterised thereby, that a gap (8) ist still present between the edge bar (2, 2') of every fixed grate stage and the lateral boundary parts (4) even when the lateral boundary parts (4) and the additional parts (9), adjacent to these boundary parts, respectively, lie without gap against the edge bar (1', 1, respectively) of the movable grate stage and that an additional edge grate bar (9, 26) is associated with the edge bar (2, 2') of the stationary grate stage, is matched to the course of the surface of the stationary edge bar (2, 2') at least in the edge region thereof, lies closely against the movable lateral boundary parts (4) while overlapping the gap (8) between the lateral boundary parts (4) and the stationary grate bar (2, 2') as well as the latter in its edge region, is displaceable in transverse direction to the edge bar (2, 2') of the fixed grate stage relative thereto and is retained while following pivotal movements of the stationary edge bar (2, 2').

2. Grate covering according to claim 1, characterised thereby, that the additional edge grate bar (9, 26) consists of a pivotably guided carrier part (11, 11') following the pivotal movements of the fixed edge bar (2, 2') and a cover part (10, 27) fastened thereat and resting on the associated edge bar (2, 2').

3. Grate covering according to claim 1 or 2, characterised thereby, that the additional edge grate bar (9, 26) is pressable against the lateral boundary parts (4) by resilient means (21, 21', 25).

4. Grate covering according to one of the claims 1 to 3, characterised thereby, that the additional edge grate bar (9, 26) or the carrier part (11, 11') thereof is guided (19, 20, 19', 20') pivotably on the associated lateral boundary parts (4).

5. Grate covering according to one of the claims 1 to 3, characterised thereby, that the additional edge grate bar (9, 26) or the carrier part (11, 11') thereof is carried and guided exclusively by the edge bar (2, 2') of the stationary grate stage.

6. Grate covering according to one of the claims 1 to 5, characterised thereby, that the additional edge grate bars (9) of grate stages of the grate covering lying behind one another adjoin sealingly against one another endwise and that the edge bars (1) respectively executing a riddling movement are guided beside the additional edge grate bars (9).

7. Grate covering according to claim 6, characterised thereby, that the additional edge grate bars (9) laterally overlap at their endwise contact surfaces (23, 24).

8. Grate covering according to one of the claims 1 to 5, characterised thereby, that each additional edge grate bar (26) rests by its head (28) on the movable edge bar (1') respectively lying thereunder and is covered by the respectively overlying edge bar (1') of movable grate stages, which in the region of its head (18') displays a recess (29, 30) matched to the profile of the additional edge grate bar (26).

9. Grate covering according to one of the claims 1 to 8, characterised thereby, that the grate back of the additional edge bar (9, 26) is inclined from the lateral boundary parts (4) towards the grate covering.

**Revendications**

1. Plan de grille, en particulier pour grands foyers, comprenant des étages de grille fixes (2, 2') et mobiles (1, 1') alternants constitués de barreaux de grille (1, 1', 2, 2') et se recouvrant partiellement, des pièces de délimitation latérale ou bordures (4) d'un dispositif compensateur (3) étant disposée sur un côté au moins du plan de grille pour être pressées élastiquement contre le plan de grille, transversalement à la direction longitudinale du plan de grille, caractérisé en ce qu'une fente (8) existe entre le barreau latéral (2, 2') de chaque étage fixe et les bordures (4), même si les bordures (4) ou des pièces auxiliaires (9) appliquées contre elles s'appliquent sans fente intermédiaire contre le barreau latéral (1'respectivement 1) de l'étage mobile voisin, et que le barreau latéral (2, 2') de l'étage fixe est combiné avec un barreau de rive auxiliaire (9, 26) adapté au profil de la surface du barreau latéral fixe (2, 2'), au moins dans la région du bord de celui-ci, appliqué intimement contre les bordures (4) déplaçables, en recouvrant la fente (8) entre les bordures (4) et le barreau fixe (2, 2'), de même que la région du bord de ce dernier, déplaçable transversalement au barreau latéral (2, 2') de l'étage fixe par rapport à celui-ci et maintenu de manière à suivre des mouvements oscillants du barreau latéral fixe (2, 2').

2. Plan de grille selon la revendication 1, caractérisé en ce que le barreau de grille auxiliaire (9, 26) est constitué d'une pièce de support (11, 11') oscillante guidée, qui suit les oscillations du barreau latéral fixe (2, 2'), et d'un recouvrement (10, 27) fixé à la pièce de support et reposant sur le barreau latéral (2, 2') correspondant.

3. Plan de grille selon la revendication 1 ou 2, caractérisé en ce que le barreau de rive auxiliaire (9, 26) peut être pressé par des moyens élastiques (21, 21', 25) contre les bordures (4).

4. Plan de grille selon l'une des revendications 1 à 3, caractérisé en ce que le barreau de rive auxiliaire (9, 26) ou sa pièce de support (11, 11') est guidé (19, 20, 19', 20') dans ses mouvements oscillants sur les bordures (4) correspondantes.

5. Plan de grille selon l'une des revendications 1 à 3, caractérisé en ce que le barreau de rive auxiliaire (9, 26) ou sa pièce de support (11, 11') est porté et guidé exclusivement par le barreau latéral (2, 2') de l'étage fixe.

6. Plan de grille selon l'une des revendications 1 à 5, caractérisé en ce que les barreaux de rive auxiliaires (9) d'étages disposés les uns derrière les autres du plan de grille sont disposés bout à bout jointifs de façon étanche et en ce que les barreaux latéraux (1) mobiles sont guidés à côté des barreaux de rive auxiliaires (9).

7. Plan de grille selon la revendication 6, caractérisé en ce que les barreaux de rive auxiliaires (9) se recouvrent latéralement à leurs surfaces de contact extrêmes (23, 24).

8. Plan de grille selon l'une des revendications 1 à 5, caractérisé en ce que chaque barreaux de rive auxiliaire (26) repose par sa tête (28) sur le barreau latéral mobile (1') sous-jacent et est recouvert par un barreau latéral (1') mobile qui, dans la région de sa tête (18'), présente un évidement (29, 30) adapté au profil du barreau de rive auxiliaire (26).

9. Plan de grille selon l'une des revendications 1 à 8, caractérisé en ce que le dos du barreau de rive auxiliaire (9, 26) est incliné des bordures (4) vers le plan de grille.

Fig. 1

Fig. 2

Fig. 3

Fig. 4

27a  2'  26  4  27b  18'  1'  27c

1'

28  15'  20'  19'  32  11'  12'

V

Fig. 5

4

31  4  29  1'

26  3

1'  29

18'  27

30  12'  30

2'  8

22'  21'  11'  11'  19'

# Fig. 6